# EUROPÄISCHE PATENTSCHRIFT

(11) **EP 1 005 432 B1**
(45) Veröffentlichungstag und Bekanntmachung des Hinweises auf die Patenterteilung: **13.11.2002**
(21) Anmeldenummer: 98946418.5
(22) Anmeldetag: 24.08.1998
(51) Int. Cl.: B65G 1/137

(54) **DYNAMISCHES KOMPAKTLAGER**
DYNAMIC COMPACT STORAGE UNIT
DISPOSITIF DE STOCKAGE DYNAMIQUE COMPACT

(30) Priorität: 22.08.1997 DE 19736530
(43) Veröffentlichungstag der Anmeldung: 07.06.2000
(73) Patentinhaber: Swisslog Logistiksysteme GmbH, 71634 Ludwigsburg (DE)
(72) Erfinder: RADAELLI, Luigi, CH-5723 Teufenthal (CH); HELLKUHL, Ludger, D-33332 Gütersloh (DE)
(74) Vertreter: Rösler, Uwe, Dipl.-Phys.
(86) Internationale Anmeldenummer: EP9805358
(87) Internationale Veröffentlichungsnummer: WO99010258

(56) Entgegenhaltungen:
- EP-A- 0 627 371
- EP-B- 0 500 065
- WO-A-97/15513
- DE-A- 1 431 582

## Beschreibung

Die Erfindung betrifft ein dynamisches Kompaktlager mit einem Lagergerüst bestehend aus mehreren übereinander angeordneten Lagerebenen, die untereinander über vertikal ausgerichtete Transportschächte für Vertikalfördereinrichtungen verbunden sind, wobei in den Lagerebenen horizontal ausgerichtete Transportgassen für Horizontalfördereinrichtungen vorgesehen sind und wobei die Lagerebenen seitlich der Transportgassen Lagerkanäle aufweisen, in denen Ladeeinheiten bestehend aus Ladungsträgern zur Aufnahme von Lagergut bewegbar angeordnet sind.

Ein derartiges dynamisches Kompaktlager ist aus der EP 0 500 065 B1 bekannt. Dort ist ein Lager für auf Paletten zu transportierendes Lagergut beschrieben, welches ein Lagergerüst, bestehend aus mehreren übereinander angeordneten Lagerebenen aufweist, die untereinander über vertikal ausgerichtete Transportschächte für Vertikalfördereinrichtungen verbunden sind, aufweist. In den Lagerebenen sind horizontal ausgerichtete Transportgassen für Horizontalfördereinrichtungen vorgesehen. Seitlich der Transportgassen sind Lagerkanäle angeordnet, in denen das Lagergut aufnehmende Ladungsträger bewegbar sind. Bei diesem Lager unterliegt das gesamte Lagergerüst einem Rastermaß, welches durch die Abmessungen der größtmöglichen Ladeeinheit vorgegeben ist. Dabei ergibt sich der Nachteil, daß Lagerfläche ungenutzt bleibt, wenn ein oder mehrere kleine Teile auf einem großen Ladungsträger einen ganzen Lagerplatz belegen.

Außerdem ist aus der DE 19 08 525 A1 ein Lagersystem zum Aufnehmen von Rollpaletten in übereinander angeordneten Lagerebenen bekannt. In den Lagerebenen sind jeweils horizontal ausgerichtete Transportgassen vorgesehen, denen rechtwinklig Lagerkanäle für Paletten zugeordnet sind. In den Transportgassen sind Horizontalfördereinrichtungen verfahrbar, die die einzelnen Paletten zu den vorgesehenen Lagerkanälen transportieren und am Anfang der Reihe absetzen und die Palette mit weiteren Paletten in dem Lagerkanal zu einem Palettenzug koppeln. Die Lagerebenen sind untereinander mit einem Vertikalförderer in einem sogenannten Entnahmeturm verbunden. Bei dem beschriebenen Lager ist die Unterteilung des Lagers in ein Vorratslager, Ergänzungslager und Entnahmelager mit teilweise verschiedenartiger Fördertechnik erforderlich. Außerdem muß zur Entnahme der Waren von den Paletten jeder Horizontalfördereinrichtung eine Bedienungs- und Entnahmebühne zugeordnet sich die durch eine Bedienperson zwischen allen Lagerebenen bewegbar sein muß. Hierbei muß die Bedienund Entnahmebühne von einer Bedienperson in die Lagerebene gebracht werden. Dadurch ist ein schnelles Ein- und Auslagem bzw. Abwickeln von Kommissionleraufträgen nicht gewährleistet. Außerdern sind erhöhte Sicherheitsanforderungen zu steilen, wenn sich Personen im eigentlichen Lagerbereich aufhalten müssen. Dadurch erhöhen sich zwangsläufig die Kosten für die Fördereinrichtungen und den Aufbau des Lagers. Bei dem vorgegebenen Lager ist das Abwickeln von Kommissionieraufträgen aufwendig, da für Lagergut unterschiedlicher Größe keine entsprechenden Ladungsträger zur Verfügung stehen.

Der Erfindung liegt daher die Aufgabe zugrunde, ein dynamisches Kompaktlager derart zu gestalten, daß hohe Umschlagsgeschwindigkeiten bei vergleichsweise geringen Kosten für Lageraufbau und Fördereinrichtungen erreichbar sind. Außerdem sollen insbesondere Kommissionieraufträge schnell und sicher abgewickelt werden können. Mit der neuartigen Struktur soll weiterhin ein platzsparendes Einlagern von Lagergut unterschiedlicher Größe ermöglicht werden.

Diese Aufgabe wird bei dem erfindungsgemäßen Gegenstand durch die kennzeichnenden Merkmale des Anspruchs 1 gelöst. Vorteilhafte Ausgestaltungen und Weiterbildungen ergeben sich aus den nachfolgenden Ansprüchen.

Die mit der Erfindung erzielbaren Vorteile liegen insbesondere in der schnellen Abwicklung von Lager- und Kommissionieraufträgen für Lagergut beliebiger Abmessungen. Es wird hierbei ein System modular aufeinander aufbauender Ladungsträger verwendet, das eine möglichst platzsparende Unterbringung des gesamten zu lagernden bzw. zu kommissionlerenden Lagerguts ermöglicht. Ladungsträger mit oder ohne das darauf lagernde Lagergut stellen eine Ladeeinheit dar. Das dynamische Kompaktlager besteht aus einem Lagergerüst, in dem eine oder mehrere übereinander angeordnete Lagerebenen mit den ihnen zugeordneten vertikal und horizontal ausgerichteten Transportschächten bzw. Transportgassen eine Funktionseinheit bilden. Das Lagergerüst ist zur Aufnahme von Lade- oder Funktionseinheiten unterschiedlicher Abmessungen ausgebildet. Eine oder mehrere Funktionseinheiten gleicher Abmessungen bilden einen Funktionsbereich. Die Anordnung von unterschiedlichen Funktionsbereichen für Ladungsträger verschledener Abmessungen und die Zuordnung von entsprechend dimensionierten Vertikal- und Horizontalfördereinrichtungen ermöglicht, die unterschiedlichen Ladeeinheiten sowohl von ihren geometrischen Abmessungen (Länge x Breite x Höhe) als auch von den zugehörigen maximalen Gewichten beliebig nach Menge und geometrischer Anordnung innerhalb des Basis-Lagergerüstes anzuordnen und zwischen den Ein- und Auslagerungspunkten des Lagers zu transportieren und zu fertigen Ladeeinheiten für LKWs oder anderen Transporteinrichtungen zu sortieren und bereitzustellen. Ein modularer Aufbau der verschiedenen Funktionsbereiche wird durch die Ausiegung der Lade- bzw. Funktionseinheiten in einem festgelegten Rastermaß ermöglicht. Das Rastermaß innerhalb des Lagergerüstes ist durch die geometrischen Abmessungen der größtmöglichen Ladeeinheit bestehend aus Ladungsträger und Lagergut bestimmt. So ist es möglich, ein Vielfaches der jeweils kleineren Ladeeinheiten in einem Lagergerüst in einem beliebig festzulegenden Funktionsbereich anzuordnen. Die Abmessungen der Lade- bzw. Funktionseinheiten können vorteilhaft so gewählt werden, daß möglichst viele Kombinationen von Lade- bzw. Funktionseinheiten mit minimalem Platzverlust in die Funktionsbereiche und Funktionseinheiten größerer Abmessungen einschachtelbar sind. Die einzelnen Funktionsbereiche bzw. Funktionseinheiten bilden ein komplexes geometrisches Gebilde, bei dem eine kleinere Funktionseinheit in das Lagergerüst eines größeren Funktionsbereiches fraktalartig eingefügt werden kann. Die Funktionseinheiten der Funktionsbereiche sind untereinander durch entsprechende Fördereinrichtungen logistisch verbunden und außerdem sind die Funktionseinheiten und Funktlonsbereiche vorteilhaft logistisch mit mindestens einem Kommissionierbereich verbunden. Mindestens einer der Funktionsbereiche ist deswelteren mit mindestens einem Ein- und Auslagerbereich verbunden.

Ein besonderer Vorteil liegt in der konsequenten gaometrischen Verschachtelung der fraktalen Lagerelemente (Ladungsträger, Lagergut, Aufbau des Basis-Lagergerüstes und des Lagergerüstes in den Funktionsbereichen). Dadurch wird es ermöglicht, nachträglich zusätzliche Funktionseinheiten oder Erweiterungen von Funktionsbereichen in das betriebsfertige Kompaktlager einzubringen.
Besonders vorteilhaft ist es, daß das Basis-Lagergerüst nicht erweitert werden muß. Es werden lediglich die Lagergerüste in den Funktionsbereichen auf die zu erweiternde Funktionseinheit umgebaut und die Transportgassen bzw. -schächte werden entsprechend angepaßt. Auch das nachträgliche Einbringen von Fördereinrichtungen, um die Leistung eines oder mehrerer Funktionsbereiche zu erhöhen, ist möglich, ohne das Basis-Lagergerüst zu erweitern. Der modulare Aufbau des gesamten Kompaktlagers macht eine solche Erweiterung des Lagers oder einzelner Funktionsbereiche sowie eine Leistungserhöhung somit mit einfachem Aufwand möglich.
Einen weiteren Vorteil liefert das für dieses Lager konzipierte Lagerverwaltungssystem, welches über eine Lernfähigkeit bezüglich seiner Verwaltungsroutinen im Fall einer Kapazitätserweiterung verfügt. Eine Kapazitätserwelterung des Lagers wird automatisch bei Inbetriebnahme der entsprechenden Transportsysteme im sogenannten teach-in-Verfahren erfaßt und für alle weiteren Verwaltungsroutinen im Lagerverwaltungsrechner zur Verfügung gestellt. Damit entfallen langwierige Programmierarbeiten mit aufwendigen Inbetriebsetzungsroutinen.

Einen weiteren Vorteil schafft die Ausstattung der einzelnen Funktionseinheiten bzw. Funktionsbereiche mit einer ausreichenden Anzahl von Vertikalfördereinrichtungen. Dadurch, daß einer Funktionseinheit bzw. einem Funktionsbereich mehrere Vertikalfördereinrichtungen zugeordnet sein können, die durch Schnittstellen mit der Kommissionierzone und/oder den Ein/Auslagerbereichen verbunden sind, ergeben sich kurze Transportwege zu den Arbeitsplätzen im Kommissionierbereich. An diesen Arbeitsplätzen, den sogenannten Workstations, kann Lagergut auf größeren Ladungsträgern vereinzelt und auf kleineren Ladungsträgern eingelagert werden. Der umgekehrte Weg, daß kleinere Lagergüter zu einer größeren Ladung zusammengestellt oder zu einer Funktionseinheit zusammenzustellen sind, ist ebenfalls an denselben Workstations möglich.

Ein weiterer Vorteil des erfindungsgemäßen Lagers liegt darin, daß einzelne Funktionseinheiten mit ihrem Lagergerüst innerhalb des Lagers von einem Funktionsbereich zu einem anderen Funktionsbereich oder zu einer Schnittstelle mit Kommissionierzone und/oder Wareneingangs/Warenausgangsbereich bewegbar sind. Dazu ist mindestens eine Transportgasse innerhalb des Lagers für einen Funktionsbereich von Funktionseinheiten so plaziert, daß die Funktionseinheit in der Art eines beweglichen Regals mittels einer Horizontalfördereinrichtung in einen anderen Funktionsbereich mit beispielsweise kleineren Lade- bzw. Funktionseinheiten transportiert werden kann und durch die dort zugeordneten Horizontal- und Vertikalfördereinrichtungen ver- oder entsorgt wird. Dadurch können die für die kleineren Lade- bzw. Funktionseinheiten vorgesehenen Funktionsbereiche und die Anzahl der dort genutzten Fördergeräte kleiner gehalten werden. Dies ist insbesondere dann vorteilhaft, wenn es sehr viele Artikel gibt, die nur selten in der Kommissionierung benötigt werden. Diese Artikel können in ihrem beweglichen Regal dynamisch im Lager an jeder Stelle zur Verfügung stehen und sie können bei Bedarf den Funktionsbereichen mit kleineren Lade- bzw. Funktionseinheiten zugeführt werden.

Die erfindungsgemäße Ausgestaltung der Fördereinrichtungen innerhalb des Lagers bringt ebenfalls zusätzliche Vorteile. Verschiedene Horizontal- und Vertikalfördereinrichtungen können so ausgestaltet sein, daß sie Lade- bzw. Funktionseinheiten unterschiedlicher Abmessungen aufnehmen können. Dazu sind die Fördereinrichtungen entweder mit zwei oder mehreren zeitgleich arbeitenden oder einzeln entsprechend plazierten Greifern, Palettenhandhabungsvorrichtungen oder dgl. für die Ladungsträger ausgebildet. Ein besonderes Merkmal der Ausbildung einzelner Funktionseinheiten mit deren Lagergerüst liegt darin, daß zwei oder mehrere Lade- bzw. Funktionseinheiten gleichzeitig innerhalb des Lagers bewegbar sind. Hierbei ist es möglich, die Ladungsträger entweder in gekoppeltem oder ungekoppeltem Zustand zu bewegen. Der Transport erfolgt entweder durch zeitgleich arbeitende Fördereinrichtungen oder durch Fördereinrichtungen, die mehrere Lade- bzw. Funktionseinheiten aufnehmen können.

Der besondere Vorteil liegt hierbei darin, daß auf diese Weise zwei kleinere Ladungsträger zur Lagerung eines größeren Ladungsgutes verwendet werden können. Somit reduziert sich die Anzahl der benötigten Ladungsträgertypen und damit gleichzeitig die Anzahl der speziell auf einen Ladungsträgertyp ausgerichteten Transporteinrichtungen.

Ein Ausführungsbeispiel der Erfindung ist in der Zeichnung - rein schematisch - dargestellt und wird im folgenden näher beschrieben.

Es zeigen:
- Figur 1: den Lageraufbau mit Darstellung der unterschiedlichen Funktionsbereiche in einer perspektivischen Einsicht,
- Figur 2: eine einzelne Lagerebene in der Draufsicht mit einem angebundenen Wareneingangs-/Warenausgangsbereich bzw. Kommissionierbereich,
- Figur 3: ausschnittsweise die Darstellung von Funktionseinheiten bestehend aus kleineren Ladeeinheiten, die sowohl von kleinen als auch von großen Fördereinrichtungen ver- und entsorgt werden in einer perspektivischen Ansicht,
- Figur 4: den Aufbau des Kompaktlagers in der Seitenansicht im Schnitt,
- Figur 5: die Zuführung zu einem Arbeitsplatz (Workstation) in der Schnittstelle in der Draufsicht,
- Figur 6: die Zuführung zu einem Arbeitsplatz (Workstation) in der Schnittstelle gemäß Figur 5 im Schnitt,
- Figur 7: eine Horizontalfördereinrichtung, die zur Aufnahme unterschiedlich großer Ladeeinheiten ausgebildet ist,
- Figur 8: zwei zeitgleich arbeitende Vertikalfördereinrichtungen zur Aufnahme von zwei kleinen Ladungsträgern mit einem großen Ladungsgut,

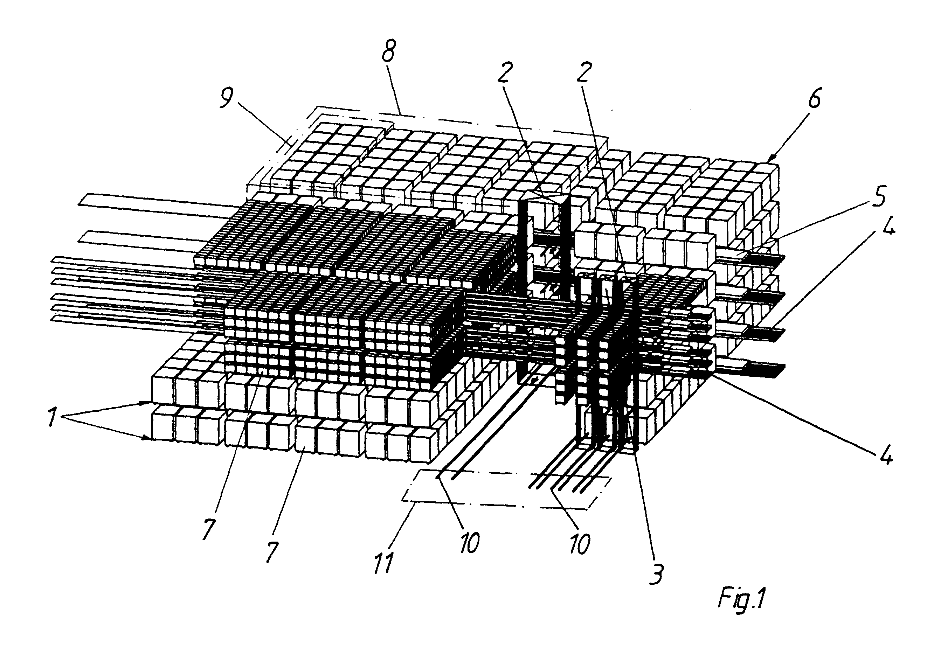

In den Figuren 1 bis 4 ist ein Kompaktlager in der prinzipiellen Aufbauform und verschiedenen Ausbildungen gezeigt. Das Basis-Lagergerüst, welches üblicherweise eine Stahlbaukonstruktion ist, wurde aus Gründen der Übersichtlichkeit nicht dargestellt.
Das Kompaktlager weist innerhalb dieses Lagergerüstes übereinander angeordnete Lagerebenen (1) auf, die untereinander mittels in vertikal ausgerichteten Transportschächten (2) angeordneten Vertikalfördereinrichtungen (3) verbunden sind. In den Lagerebenen (1) sind horizontal ausgerichtete Transportgassen (4) für Horizontalfördereinrichtungen (5) vorgesehen. Die Lagerebenen (1) weisen seitlich der Transportgassen (4) Lagerkanäle (6) auf, in denen das Lagergut auf Ladungsträgern einlagerbar ist. Ladungsträger mit oder ohne das darauf angeordnete Lagergut bilden eine Ladeeinheit (7). Die Ladungsträger sind im einzelnen nicht dargestellt. Vorzugsweise kommen Paletten zum Einsatz, die schienengeführt auf Rollen oder Gleitkufen in Palettenzügen oder einzeln bewegbar sind. Als Fördereinrichtungen sind Vertikalfördereinrichtungen (3) und Horizontalfördereinrichtungen (5) vorgesehen, die mit Mitteln zum Handhaben der Paletten ausgebildet sind, so daß die Paletten einzeln oder gekoppelt bewegt werden können. Innerhalb der Lagerkanäle (6) können die Ladungsträger auf unterschiedliche Weise bewegt werden. In dem dargestellten Ausführungsbeispiel kommt eine Palette als Ladungsträger zum Einsatz, die mit mehreren weiteren Paletten zu einem Palettenzug gekoppelt im Lagerkanal (6) bewegt wird. Dazu sind die Horizontal- und Vertikalfördereinrichtungen (3, 5)mit einer entsprechenden Technik ausgebildet, derart, daß sie die ein- und auszulagernde Palette vom Palettenzug entkoppeln bzw. mit diesem koppeln oder eine einzelne Palette am Anfang des Kanals absetzen oder aufnehmen. Es ist aber auch möglich, die Ladungsträger über Satellitfahrzeuge der Horizontal- oder Vertikalfördereinrichtungen (3, 5) im Lagerkanal (6) zu bewegen (nicht dargestellt). Ebenso sind Rollenbahnen möglich und die Bewegung der Ladungsträger oder des Lagergutes nach dem Schwerkraftprinzip denkbar. Eine weitere nicht dargestellte Variante sind innerhalb der Lagerkanäle (6) installierte Fördereinrichtungen mit eigenem Antrieb oder einem durch die Horizontal- oder Vertikalfördereinrichtungen (3, 5) aktiviertem Antrieb.
Das Kompaktlager ist in Funktionsbereiche (8) für Ladungsträger unterschiedlicher Abmessungen unterteilt, denen entsprechend der Ladungsträger dimensionierte Vertikal- und Horizontalfördereinrichtungen (3, 5) zugeordnet sind. Das Rasterrnaß innerhalb der Funktionsbereiche (8) ist durch die geometrischen Abmessungen der größtmöglichen Ladeeinheit (7) bestehend aus Ladungsträger und Lagergut bestimmt.
Mehrere übereinander angeordnete Lagerebenen (1) bilden innerhalb des Lagergerüstes mit den ihnen zugeordneten vertikal und horizontal ausgerichteten Transportschächten (2) bzw. Transportgassen (4) eine Funktionseinheit (9). Das Lagergerüst ist zur Aufnahme von Lade- bzw. Funktionseinheiten (9) unterschiedlicher Abmessungen ausgebildet. Ein oder mehrere übereinander und/oder nebeneinander angeordnete Lade- bzw. Funktionseinheiten (9) gleicher oder unterschiedlicher Abmessungen, die durch die gleichen Horizontal- und Vertikalfördereinrichtungen bedient werden können, bilden einen Funktionsbereich (8). Das Lagergerüst weist mindestens einen Funktionsbereich (8) mit Lade- bzw. Funktionseinheiten (9) größerer Abmessung und mindestens einen Funktionsbereich (8) für Lade- bzw. Funktionseinheiten (9) kleinerer Abmessungen auf.

Das Rastermaß innerhalb des Lagergerüstes ist durch die geometrischen Abmessungen der größtmöglichen Ladeeinheit (7) bestehend aus Ladungsträger und Lagergut bestimmt. Ein Vielfaches der jeweils kleineren Lade- bzw. Funktionseinheit (9) ist in das Lagergerüst eines größeren Funktionsbereiches (8) einschachtelbar.

Den Funktionsbereichen (8) für Lade- bzw. Funktionseinheiten (9) kleinerer und größerer Abmessungen sind jeweils mindestens eine Vertikal- und eine Horizontalfördereinrichtung (3, 5) zugeordnet. Den Funktionsbereichen (8) ist mindestens jeweils ein Transportweg (10) zu einer Schnittstelle (11) zugeordnet, in der Lade- bzw. Funktionseinheiten (9) kleinerer und größerer Abmessungen zusammenführbar sind. Die Schnittstelle (11), in Figur 1 nur schematisch dargestellt, ist als Kommissionierbereich und/oder Wareneingangs-/Warenausgangsbereich ausgebildet.

Die Funktionsbereiche (8) für die größeren Ladungsträger sind in dem gezeigten Beispiel mit separaten, auf den Funktionsbereich (8) ausgelegten, Fördereinrichtungen ausgebildet. Über die in Figur 1 nur schematisch dargestellte Schnittstelle des Kommissionierbereichs (11) ist dieser Funktionsbereich (8) mit dem restlichen Lager logistisch verbunden.

Ein oder mehrere Funktionsbereiche können mit universell an Ladungsträger unterschiedlicher Größe anpaßbaren Fördereinrichtungen ausgebildet werden.

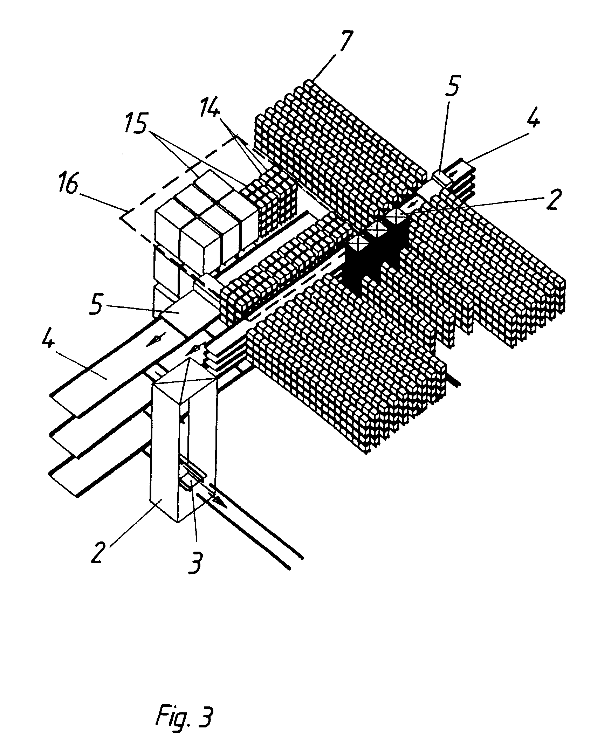

In der Figur 3 ist eine weitere besondere Eigenschaft des Erfindungsgegenstandes dargestellt. Durch die modular abgestufte Dimensionierung der Lade- bzw. Funktionseinheiten (9) können mehrere kleinere Lade- bzw. Funktionseinheiten (14) eine Funktionseinheit der größeren Abmessung (15) bilden und an einer beliebigen Stelle im Funktionsbereich (16) dieser größeren Lade- bzw. Funktionseinheit (15) angeordnet werden. Es ist auch möglich, nur eine einzelne Lade- bzw. Funktionseinheit (15), die sich aus Lade- bzw. Funktionseinheiten kleinerer Abmessung zusammensetzt, beliebig auf einem Lagerplatz in einem Funktionsbereich größerer Abmessung (15) anzuordnen.

Beliebig viele Lade- bzw. Funktionseinheiten (14) können geometrisch so gestaltet sein, daß sie durch Einschieben paßgenau in eine größere Funktionseinheit (15) eingeschachtelt werden können und über entsprechend dimensionierte Vertikal- und Horizontalfördereinrichtungen (3, 5) mit dem Ein- und Auslagerbereich und/oder dem Kommissionierbereich sowie dem restlichen Lager logistisch verbunden werden können.

Einzelne Lade- bzw. Funktionseinheiten (14) kleinerer Abmessung können zu Funktionsbereichen (16) mit Lade- bzw. Funktionseinheiten größerer Abmessung innerhalb des Lagers transportiert werden und über die dort vorhandenen Fördereinrichtungen logistisch mit dem restlichen Lager verbunden werden. Die größere Funktionseinheit (15) ist hierbei als bewegliches Regal gestaltet, dessen Regalebenen den gleichen Abstand aufweisen wie die Transportgassen des Funktionsbereiches mit den Lade- bzw. Funktionseinheiten (14) kleinerer Abmessung.

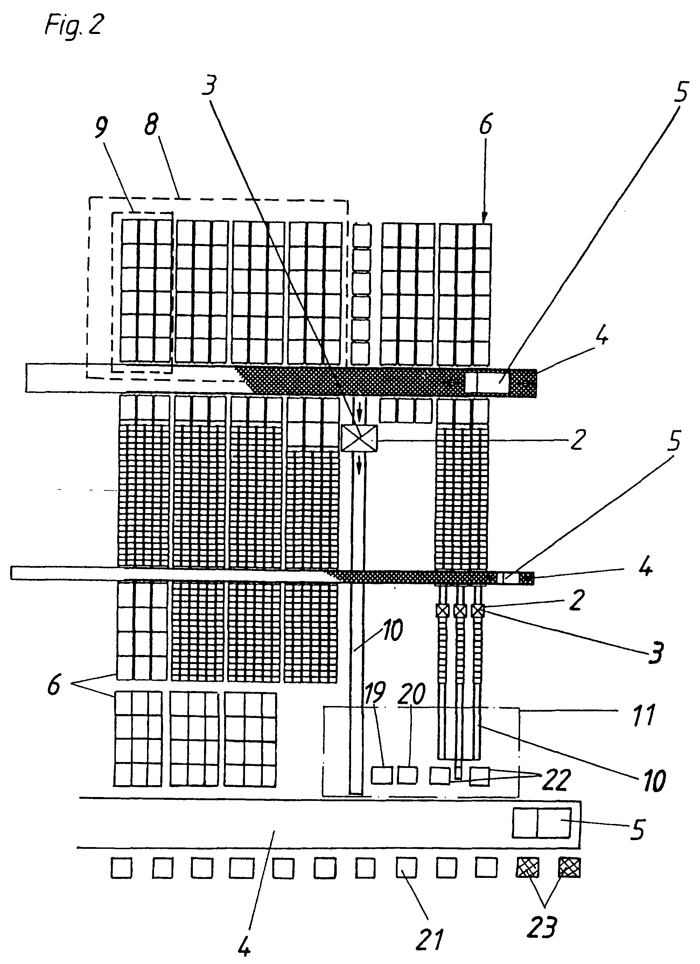

Anhand der Figur 2 wird die Abwicklung eines Kommissionierauftrages beschrieben. Hierbei wird von einem 2-stufigen Verfahren ausgegangen. Im ersten Schritt wird eine Lade- bzw. Funktionseinheit mit größeren Abmessungen aus ihrem Funktionsbereich (8) zu einem Arbeitsplatz bzw. einer Workstation im Kommissionierbereich transportiert. Vom Lagerverwaltungssystem wird hierzu z.B. ein bestimmtes Lagergut A abgerufen, welches sich auf einem großen Ladungsträger befindet. Dazu fährt eine Horizontalfördereinrichtung (5) in der Transportgasse (4) an den Anfang des entsprechenden Lagerkanals (6) und zieht eine Ladeeinheit, z.B. in Form einer Palette mit darauf angeordnetem Lagergut heraus. Die Palette wird zur Vertikalfördereinrichtung (3) transportiert und gelangt über den Transportschacht (2) und den Transportweg (10) zur Schnittstelle (11), den Kommissionierbereich, die auf gleicher Ebene oder einer beliebigen anderen Ebene liegen kann.

Die auf dieser größeren Lade- bzw. Funktionseinheit befindlichen Packstücke werden dort vereinzelt und auf kleinere Ladungsträger plaziert. Diese Ladeeinheiten werden anschließend über den entsprechenden Transportweg (10) in einen Funktionsbereich für Lade- bzw. Funktionseinheiten mit kleineren Abmessungen eingelagert. Der Kommissionierbereich stellt somit eine Schnittstelle (11) zwischen zwei unterschiedlichen Funktionsbereichen dar. Die Kommissionierung ist möglich, sobald alle hierfür benötigten Artikel in der benötigten Menge im Funktionsbereich für Lade- bzw. Funktionseinheiten mit kleineren Abmessungen vorhanden sind. In genau den gleichen Schritten, wie für große Ladungsträger beschrieben, werden kleine Ladungsträger aus dem Funktionsbereich für kleinere Lade- bzw. Funktionseinheiten zu einem Arbeitsplatz bzw. einer Workstation im Kommissionierbereich transportiert. Die auf den kleineren Lade- bzw. Funktionseinheiten befindlichen Packstücke werden auf einem größeren Ladungsträger gesammelt und anschließend in den Funktionsbereich für größere Lade- bzw. Funktionseinheiten oder direkt in den Auslagerbereich über die entsprechenden Fördereinrichtungen transportiert.

Dieselbe Workstation kann sowohl für das Vereinzeln wie für das Kommissionieren verwendet werden. Die besonderen Vorteile dieser Kommissionierung liegen in ihrer hohen Flexibilität und Effizienz. Eine beliebige Anzahl Kundenaufträge mit einer beliebigen Anzahl Positionen kann in beliebiger Reihenfolge fehlerfrei kommissioniert werden. Dabei läßt sich Ladungsgut beliebiger Abmessungen abwickeln.

Besondere Vorteile ergeben sich, wenn die gleichen Horizontalfördereinrichtungen (5) wie im Kompaktlager, die mit Mitteln zum Handhaben von Ladungsträgern ausgebildet sind, zur Verund Entsorgung der Workstation mit größeren Lade- bzw. Funktionseinheiten (22) eingesetzt werden:

Die Horizontalfördereinrichtungen (5) werden gleichzeitig genutzt, um die Workstation mit leeren Ladungsträgern bzw. Ladungsträgern mit leeren Holzpaletten aus neben der Horizontalfördereinrichtung plazierten Stapeleinrichtungen für Ladungsträger (19) und/oder Holzpaletten (20) zu versorgen. In ähnlicher Form können die Horizontalfördereinrichtungen (5) dafür eingesetzt werden, frei werdende Ladungsträger und/oder Holzpaletten von der Workstation zu den entsprechenden Stapelvorrichtungen (19, 20) zu transportieren.

Die Horizontalfördereinrichtungen (5) können gleichzeitig zur dynamischen Ver- und Entsorgung von entlang der Fördereinrichtung plazierten Kommissionierplätzen (21) eingesetzt werden. Hierzu werden zunächst leere Holzpaletten von einer Stapeleinrichtung (20) durch die Horizontalfördereinrichtung (5) an einen Auf-/Abgabeplatz (23) transportiert. Der Kommissionierer nutzt die Holzpalette, um einzelne Packstücke von den entlang der Horizontalfördereinrichtung plazierten größeren Lade- bzw. Funktionseinheiten zu kommissionieren. Die auf diese Weise teil- oder fertig-kommissionierten Holzpaletten werden über den Auf-/Abgabeplatz (23) durch die Horizontalfördereinrichtung (5) entweder direkt zur Workstation zur Weiterkommissionierung transportiert oder in entlang der Horizontalfördereinrichtung (5) sich befindlichen Lagerkanälen (6) vor der Weiterkommissionierung zwischengepuffert. Die Kommissionierung über die entlang der Horizontalfördereinrichtung (5) plazierten Kommissionierplätze (21) kommt sinnvollerweise immer dann zum Einsatz, wenn für einen Auftrag von einem Artikel viele Packstücke kommissioniert werden müssen. Die Kombination dieser Kommissionierung mit der Kommissionierung an der Workstation stellt eine ganz besonders effiziente und kostengünstige Lösung für ein nahezu beliebig großes Spektrum an Ladungsgütern dar.

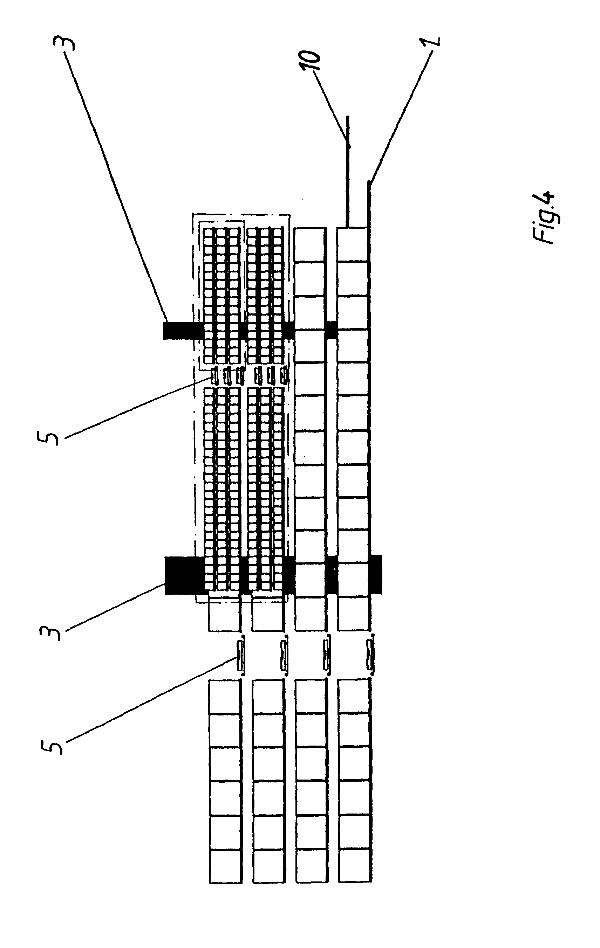

Figur 4 zeigt, wie die einzelnen Funktionseinheiten (9) zueinander angeordnet sein können. Da die Funktionsbereiche (8) ein einheitliches Rastermaß haben, können verschiedene Funktionseinheiten (9) mit den entsprechenden Horizontal- und Vertikalfördereinrichtungen (3, 5) auch übereinander angeordnet sein. So entstehen kurze Transportwege (10) zum Einund Auslagerbereich bzw. zur Schnittstelle (11) im Kommissionierbereich, wodurch ein sehr schnelles Vereinzeln oder Zusammenstellen von Waren ermöglicht wird.

Je nachdem welcher Arbeitsumfang an einer Workstation in der Kommissionierung erledigt wird, sind die Leistungsanforderungen an die Zu- und Abführung von kleineren Lade- bzw. Funktionseinheiten sehr unterschiedlich. Dabei gibt es Anwendungen, bei denen sehr hohe Leistungen gefordert werden.

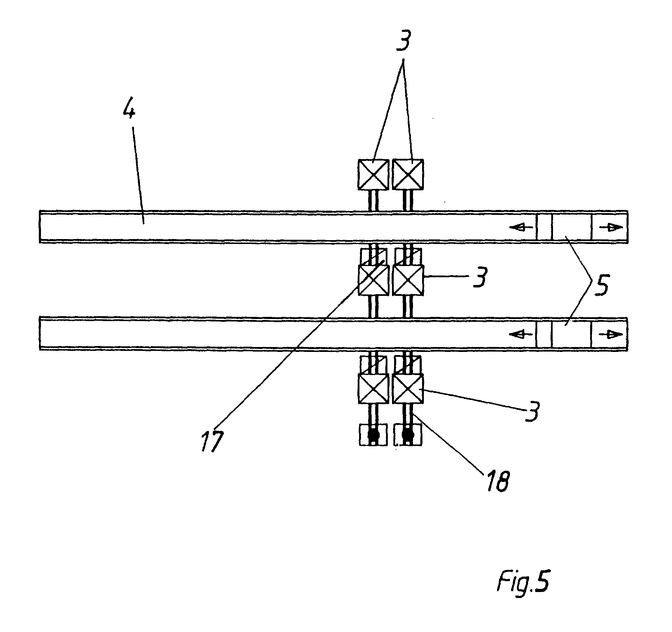

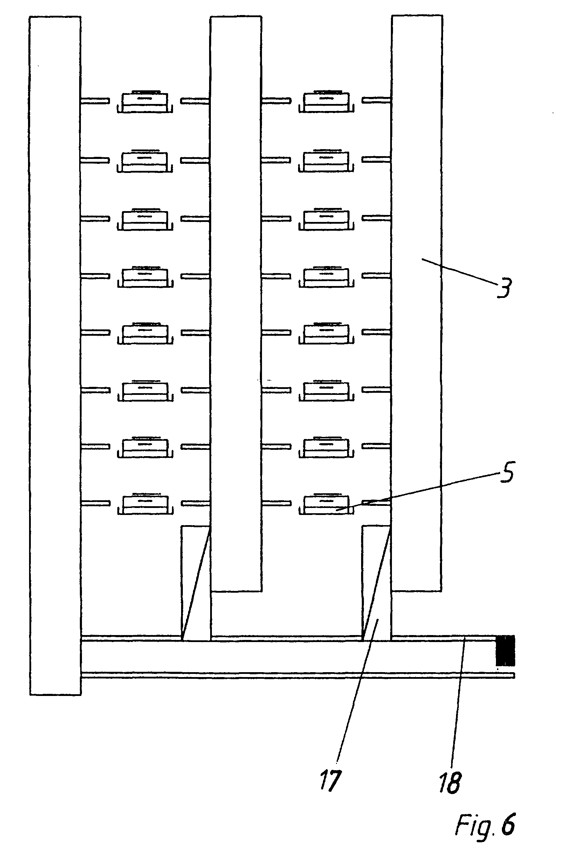

Die Figuren 5 und 6 beziehen sich auf den Aufbau einer geeigneten Workstation. Darin sind die Transportwege (10) für kleinere Lade- bzw. Funktionseinheiten zu und von einer Workstation an der Schnittstelle (11) dargestellt.

Eine oder mehrere Horizontalfördereinrichtungen (5) sind im Bereich der Workstation in höher oder tiefer gelegenen Transportgassen (4) der Lagerebenen (1) verfahrbar. Die Horizontalfördereinrichtungen (5) transportieren kleinere Lade- bzw. Funktionseinheiten (9) zu einer bzw. mehreren nebeneinander angeordneten Vertikalfördereinrichtungen (3).

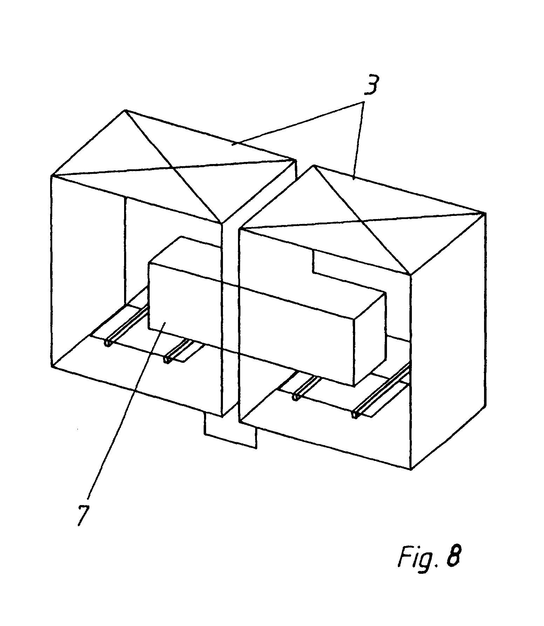

Um den gleichzeitigen Transport von zwei Ladungsträgern mit einem größeren Ladungsgut (s. auch Figur 8) oder von doppelt so großen Ladungsträgern zu ermöglichen, sind für die Ver- und Entsorgung der Workstation jeweils zwei Vertikalfördereinrichtungen (3) nebeneinander angeordnet. Zur Steigerung der Leistung sind diesem Paar gegenüberliegend auf der anderen Seite jeder Transportgasse (4) für Horizontalfördereinrichtungen (5) weitere Paare von Vertikalfördereinrichtungen (3) angeordnet.

Die am weitesten von der Workstation entfernten Vertikalfördereinrichtungen haben direkten Zugang zu einer Förderstrecke (18), die Lade- bzw. Funktionseinheiten zur bzw. von der Workstation transportiert. Die übrigen Vertikalfördereinrichtungen übergeben bzw. übernehmen Lade- bzw. Funktionseinheiten von der Förderstrecke (18) über bewegliche Übergabeplätze (17). Durch die entsprechende Anzahl Vertikal- und Horizontalfördereinrichtungen läßt sich die Transportleistung für die Lade- bzw. Funktionseinheiten, die zu bzw. von einer Workstation transportiert werden, praktisch beliebig steigern bzw. den Anforderungen anpassen. Von besonderem Vorteil ist hierbei, daß die Zusammenführung der Materialströme auf die Transportstrecke (18) ausschließlich in vertikaler Richtung erfolgt. Auf diese Weise wird ein Verschieben des Ladungsgutes auf den Ladungsträgern vermieden.

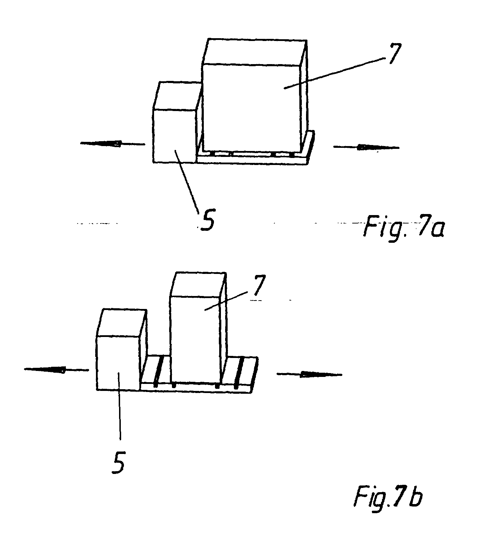

Figur 7 zeigt eine Horizontalfördereinrichtung (5) für den Transport unterschiedlich großer Ladeeinheiten (7).

Die Figur 8 zeigt schematisch, daß eine große Ladeeinheit (7) bzw. ein großes Ladungsgut auf zwei Ladungsträgern über zwei zeitgleich arbeitende Vertikalfördereinrichtungen (3) zu bewegen ist.

Das dynamische Kompaktlager arbeitet mit einem Lagerverwaltungssystem, welches über eine Lernfähigkeit bezüglich der Lager-Verwaltungsroutinen verfügt. Die Kapazität des Lagers wird bei der Erstinbetriebnahme oder die nachträgliche Kapazitätserweiterung bei Inbetriebnahme der weiteren Fördereinrichtungen automatisch erkannt. Anhand der in Betrieb genommenen Fördereinrichtungen werden die erforderlichen Verwaltungsroutinen ermittelt und zur Verfügung gestellt.

## Patentansprüche

1. Dynamisches Kompaktlager mit einem Lagergerüst bestehend aus mehreren übereinander angeordneten Lagerebenen, die untereinander über vertikal ausgerichtete Transportschächte für Vertikalfördereinrichtungen verbunden sind, wobei in den Lagerebenen horizontal ausgerichtete Transportgassen für Horizontalfördereinrichtungen vorgesehen sind und wobei die Lagerebenen seitlich der Transportgassen Lagerkanäle aufweisen, in denen Ladeeinheiten bestehend aus Ladungsträgern zur Aufnahme von Lagergut bewegbar angeordnet sind, **gekennzeichnet durch** folgende Merkmale:
a) eine oder mehrere übereinander angeordnete Lagerebenen (1) mit den ihnen zugeordneten vertikal und horizontal ausgerichteten Transportschächten (2) bzw. Transportgassen (4) bilden eine Funktionseinheit (9), die Ladeeinheiten (7) mit gleichen oder unterschiedlichen Abmessungen aufnehmen kann,
b) das Lagergerüst ist zur Aufnahme von Lade- bzw. Funktionseinheiten (9) unterschiedlicher Abmessungen ausgebildet und in seinem Rastermaß **durch** die geometrischen Abmessungen der größtmöglichen Lade- bzw. Funktionseinheit (9) bestimmt,
c) ein oder mehrere übereinander und/oder nebeneinander angeordnete Lade- bzw Funktionseinheiten (9), denen spezielle auf die Größe bzw. das Gewicht der Lade- bzw. Funktionseinheiten ausgelegte Vertikal- und/oder Horizontalfördereinrichtungen (3,5) zugeordnet sind, bilden einen Funktionsbereich (8),
d) das Lagergerüst weist mindestens einen Funktionsbereich (8) mit Lade- bzw. Funktionseinheiten (9) größerer Abmessung und mindestens einen Funktionsbereich (8) mit Lade- bzw. Funktionseinheiten (9) kleinerer Abmessungen auf.
e) die Abmessungen der Lade- bzw. Funktionseinheiten (9) sind so gewählt, daß mehrere Funktionseinheiten (9) in die Funktionsbereiche (8) und Funktionseinheiten (9) größerer Abmessungen einschachtetbar sind,
f) mindestens zwei Funktionsbereiche (8) sind mittels Vertikal- und/oder Horizontalfördersinrichtungen (3,5) über mindestens eine Schnittstelle (11) miteinander verbunden, in der die Lade- bzw. Funktionseinheiten (9) kleinerer und größerer Abmessungen zusammenführbar sind,
g) mindestens ein Funktionsbereich (8) ist mittels Vertikal- und/oder Horizontalfördereinrichtungen (3,5) mit mindestens einem Ein- und Auslagerbereich verbunden.

2. Dynamisches Kompaktlager nach Anspruch 1,
**dadurch gekennzeichnet,**
**daß** die Lade- bzw. Funktionseinheiten (9) in ihren Abmessungen so gewählt werden, daß möglichst viele Kombinationen von Lade- bzw. Funktionseinheiten mit optimierter Lagerplatznutzung in die Funktionsbereiche (8) und Funktionseinheiten größerer Abmessungen bzw. in das Rastermaß des Lagergerüstes einschachtelbar sind.

3. Dynamisches Kompaktlager nach Anspruch 1oder 2,
**dadurch gekennzeichnet,**
**daß** beliebig viele Lade- bzw. Funktionseinheiten (9) geometrisch so gestaltet sind, daß sie durch Einschieben paßgenau in den Funktionsbereich (8) einer größeren Funktionseinheit (9) einschachtelbar sind und über entsprechend plazierte und entsprechend dimensionierte Vertikal- und Horizontalfördereinrichtungen (3, 5) mit beiden Funktionsbereichen und dem Kommissionierbereich logistisch verbunden sind, wobei die größere Funktionseinheit hierbei als bewegliches Regal gestaltet ist, dessen Regalebenen den gleichen Abstand aufweisen wie die Transportgassen des Funktionsbereichs mit den Lade- bzw. Funktionseinheiten kleinerer Abmessung.

4. Dynamisches Kompaktlager nach einem oder mehreren der Ansprüche 1 bis 3,
**dadurch gekennzeichnet,**
**daß** in einem oder mehreren Funktionsbereichen (8) universell an Ladungsträger unterschiedlicher Größe anpaßbare Fördereinrichtungen eingesetzt werden.

5. Dynamisches Kompaktlager nach einem oder mehreren der Ansprüche 1 bis 4,
**dadurch gekennzeichnet,**
**daß** Horizontal- bzw. Vertikalfördereinrichtungen (3, 5) so ausgebildet sind, daß sie gleichzeitig mindestens zwei Lade- bzw. Funktionseinheiten (9) transportieren.

6. Dynamisches Kompaktlager nach einem oder mehreren der Ansprüche 1 bis 4,
**dadurch gekennzeichnet,**
**daß** mindestens in einem Funktionsbereich (8) zwei oder mehrere zeitgleich arbeitende Vertikal- bzw. Horizontalfördereinrichtungen (3, 5) eingesetzt werden, mittels der eine Lade- bzw. Funktionseinheit (9) größerer Abmessung oder ein größeres Ladungsgut auf zwei Ladungsträgern transportierbar sind.

7. Dynamisches Kompaktlager nach einem oder mehreren der Ansprüche 1 bis 6,
**dadurch gekennzeichnet,**
**daß** zwei oder mehrere Lade- bzw. Funktionseinhelten (9) kleinerer Abmessung miteinander gekoppelt von Horizontal- und Vertikalfördereinrichtungen (3, 5) größerer Abmessung bewegbar sind.

8. Dynamisches Kompaktlager nach einem oder mehreren der Ansprüche 1 bis 7,
**dadurch gekennzeichnet,**
**daß** durch entsprechende Anzahl und Plazierung von Horizontal- und Vertikalfördereinrichtungen (3, 5) sowie dem Einsatz beweglicher Übergabeplätze (17) ausreichende und den Anforderungen entsprechende Transportleistungen über die Transportstrecke (18) in und aus der Kommissionierzone erbracht werden, ohne die sichere Lage des Ladegutes auf dem Ladungsträger zu gefährden.

9. Dynamisches Kompaktlager nach einem oder mehreren der Ansprüche 1 bis 8,
**dadurch gekennzeichnet,**
**daß** die Ver- und Entsorgung von Lade- bzw. Funktionseinheiten größerer Abmessungen an einer Workstation durch eine Honzontalfördereinrichtung (5) durchführbar ist, die mit Mitteln zum Handhaben von Ladungsträgern ausgebildet ist und entlang derer Lagerkanäle (6) oder dynamisch beschickbare Kommissionierplätze plaziert sind.

10. Dynamisches Kompakliager nach einem oder mehreren der Ansprüche 1 bis 9,
**dadurch gekennzeichnet,**
**daß** die Ladeeinheiten mit koppelbaren Ladungsträgern ausgebildet sind.

## Claims

1. Dynamic compact storage provided with a storage frame consisting of a plurality of storage planes arranged in superposed relationship which are connected to each other by vertically disposed transport shafts for vertical transport devices, whereby in the storage planes there are provided transport paths for horizontal transport devices and whereby the storage planes are provided with storage channels laterally of the transport paths in which load units consisting of load supports for receiving storage goods are moveably arranged **characterized by** the following elements:
a) one or more storage planes (1) arranged in superposed relationship and their associated vertically and horizontally disposed transport shafts (2) or transport paths (4) constitute a functional unit (9) for receiving load units (7) of identical or different dimensions;
b) the storage frame is structured to receive load and functional units (9) of different dimensions and defined in its raster dimension by the geometric dimensions of the largest possible load or functional unit (9);
c) one or more load or functional units (9) arranged in superposition or side by side with which particular vertical and/or horizontal transport devices (3, 5) designed to accommodate the size or weight of the load or functional units are associated, constitute a functional area (8);
d) the storage frame is provided with at least one functional area (8) with load and functional units (9) of larger dimension and at least one functional area (8) for load and functional units (9) of smaller dimension;
e) the dimensions of the loading and/or functional units (9) are selected so that several functional units are adjustable (9) into the functional areas (8) and functional units (9) of larger dimensions;
f) at least two functional areas (8) are connected to each other by means of vertical and/or horizontal transport devices (3, 5) by at least one interface (11) where the load or functional units (9) of smaller and larger dimensions may be assembled;
g) at least one functional area (8) is connected with at least one input and output storage area by means of vertical and/or horizontal transport devices (3, 5).

2. Dynamic compact storage according to claim 1,
**characterized by** the fact
that the load and functional units (9) are selected in their dimensions so that as many combinations of load and functional units may be nested into the functional areas and functional units (8) of larger dimensions or into the raster dimension of the storage frame, at an optimum space utilization.

3. Dynamic compact storage according to claim 1 or 2,
**characterized by** the fact
that an arbitrary number of load or functional units (9) are geometrically structured such that they may be precisely nested by insertion in the functional area (8) of a larger functional unit (9) and are logistically connected with both functional areas and the commissioning are by correspondingly positioned and correspondingly dimensioned vertical and horizontal transport devices (3, 5), whereby the larger functional unit for this purpose is structured as a moveable rack the rack planes of which are of the same spacing as the transport paths of the functional area with the load and functional units of smaller dimension.

4. Dynamic compact storage according to one or more of claims 1 to 3,
**characterized by** the fact
that transport devices universally adaptable to load support of different sizes are used in one or more functional areas (8).

5. Dynamic compact storage according to one ore more of claims 1 to 4,
**characterized by** the fact
that horizontal and vertical transport devices (3, 5) are structured for simultaneously transporting at least two load or functional units (9).

6. Dynamic compact storage according to one or more claims 1 to 4,
**characterized by** the fact
that at least in functional area (8) there are used two or more synchronously operating vertical or horizontal transport devices (3, 5) by means of which may be transported a load or functional unit (9) of large dimension or a larger loaded good on two load supports.

7. Dynamic compact storage according to one or more of claims 1 to 6,
**characterized by** the fact
that two or more load or functional units (9) of smaller dimension connected to each other may be moved by horizontal and vertical transport devices (3, 5) of larger dimension.

8. Dynamic compact storage according to one or more of claims 1 to 7,
**characterized by** the fact
that sufficient transport efficiencies along the conveyor path (18) into and out of the commissioning zone satisfying demands are provided by a corresponding number and positioning of horizontal and vertical transport devices (3, 5) as well as by using moveable transfer places (17) without endangering the secure position of the loaded goods on the load support.

9. Dynamic compact storage according to one or more of claims 1 to 8,
**characterized by** the fact
that the supply and removal of load or functional units of lager dimensions at the work station may be carried out by a horizontal transport device (5) which is equipped with means for handling load supports and along which are positioned storage channels (6) or dynamically furnishable commissioning places.

10. Dynamic compact storage according to one or more of claims 1 to 9,
**characterized by** the fact
that the load units are provided with connectable load supports.

## Revendications

1. Stockage compact dynamique avec rayonnages consiste en plusieurs niveaux superposés reliés entre eux par un système de manutention vertical, la connexion horizontale est réalisée par des convoyeurs horizontaux placés près de l'allée principale et dan lesquelles se déplacent des chariots manutentionneur, déterminés par les caractéristiques suivantes :
a. un ou plusieurs niveaux de stockage superposés (1) alignés verticalement et horizontalement forment une entité (9), les unités de stockage (7) avec des dimensions identiques ou différentes à manutentionner peuvent être admise dans les colonnes (2) respectivement les allées de transport (4),
b. la structure permet l'acceptation des charges (9) avec des dimensions différentes est définie en fonction d'un gabarit de charges (9) avec les plus grandes dimensions possibles,
c. un ou plusieurs niveaux de stockage superposés (9) respectivement alignés spécialement prévus pour la dimension ou le poids des charges forment avec des convoyeurs verticaux ou horizontaux (3,5) forment une unité de stockage (8)
d. la structure de stockage comporte au moins une unité de stockage (8) avec unité de chargement respectivement unités de stockage (9) pour grosses charges et au moins une unité de stockage (8) avec unité de chargement respectivement fonction de stockage (9) pour petites charges.
e. les dimensions des charges respectivement unités de stockage (9) sont définie de tel manière que plusieurs zone (9) de stockage dans les unités de stockage pour charges de grandes dimensions sont ainsi admissibles,
f. au moins deux unités de stockage (8) sont reliées par au moins une interface (11) de manutention verticales ou horizontales qui permettent de rassembler les unités de stockage(9) de grosses ou de petites dimensions,
g. au moins une fonction de stockage (8) est reliée par des unités de manutention (3,5) vertical ou horizontal avec au moins une position d'entrée ou de sortie.

2. Stockage dynamique compact, selon la revendication 1,
**caractérisé en ce que**
la fonction de stockage respectivement de chargement (9) avec des dimensions tel que plusieurs combinaison de charge respectivement de stockage (9) avec des position des stockage optimisées dans les zones ou avec dimensions supérieur peuvent être activées.

3. Stockage dynamique compact, selon la revendication 1 ou 2,
**caractérisé en ce que**
quelques fonction de stockage respectivement de chargement (9) sont organisées géométriquement tel qu'insérer dans une zone (8) une plus grosse zone activable et au moyen d'une installation de transport vertical respectivement horizontale (3,5) reliée à la zone de préparation de commandes la plus grande unité fonctionnelle est organisée en étagères mobiles dont les niveaux avec un pas constant permettent comme les allées de transport le stockage de charges de petites dimensions.

4. Stockage dynamique compact, selon au moins l'une des revendications 1 à 3,
**caractérisé en ce que**
dans une ou plusieurs zone fonctionnelles (8) et universelles désenivre par des convoyeurs adaptables pour différentes grandeurs.

5. Stockage dynamique compact, selon au moins l'une des revendications 1 à 4,
**caractérisé en ce que**
les convoyeurs verticaux respectivement horizontaux (3,5) sont disposé de tel manière qu'ils peuvent transporter au mois deux charges.

6. Stockage dynamique compact, selon au moins l'une des revendications 1 à 4,
**caractérisé en ce que**
dans une zone (8) deux ou plus convoyeurs verticaux respectivement horizontaux peuvent travailler en même temps, ainsi les charges de grandes dimensions ou avec un support de manutention de grande dimension en mesure d'être transporté sur deux convoyeurs.

7. Stockage dynamique compact, selon au moins l'une des revendications 1 à 6,
**caractérisé en ce que**
deux ou plus charges (9) de petites dimensions réunie par des convoyeurs horizontaux respectivement verticaux pour grande dimension sont manutentionnables.

8. Stockage dynamique compact, selon au moins l'une des revendications 1 à 7,
**caractérisé en ce que**
au travers d'un nombre correspond et de position adéquate de convoyeurs horizontaux respectivement verticaux (3,5) ainsi que l'utilisation de positions de transfert mobiles (17) en suffisance et des exigences de prestation correspondant aux attentes, les entrées et sorties (18) de la zone de préparation de commande peuvent être fournie, sans menacer l'intégrité des charges.

9. Stockage dynamique compact, selon au moins l'une des revendications 1 à 8,
**caractérisé en ce que**
l'enlèvement et l'approvisionnement de charges de grandes dimensions est réalisable d'une place de travail par un convoyeur horizontal (5), au moyen de support de manutention le long des canaux (6) ou de positions de préparation dynamiquement activées.

10. Stockage dynamique compact, selon au moins l'une des revendications 1 à 9,
**caractérisé en ce que**
une unité de charge peut être couplée avec le support de manutention.
